# EUROPEAN PATENT APPLICATION

(11) **EP 4 428 646 A1**
(43) Date of publication of application: **11.09.2024**
(21) Application number: 22889882.1
(22) Date of filing: 27.10.2022
(51) Int. Cl.: G05D 1/02, B65G 1/00

(54) **SELF-POSITION ESTIMATION DEVICE, AUTONOMOUS DRIVING VEHICLE, AND SELF-POSITION ESTIMATION METHOD**

(30) Priority: 04.11.2021 JP 2021180096
(71) Applicant: IHI Corporation, Tokyo 135-8710 (JP)
(72) Inventor: EMOTO, Mai, Tokyo 135-8710 (JP)
(74) Representative: TBK
(86) International application number: PCT/JP2022/040246
(87) International publication number: WO 2023/080062

(57) **Abstract**

A self-location estimation device (200) includes: a map information acquisition unit (202, 204) configured to acquire map information in a storage facility (10) generated based on shape information of an object (X, Y) and storage status information of the object (X, Y) in the storage facility (10); an environmental information acquisition unit (201) configured to acquire environmental information of surroundings; and a self-location estimation unit (203) configured to estimate a self-location based on the map information acquired by the map information acquisition unit (202, 204) and the environmental information acquired by the environmental information acquisition unit (201).

## Description

### TECHNICAL FIELD

The present disclosure relates to a self-location estimation device, an autonomous driving vehicle, and a self-location estimation method.

### BACKGROUND ART

In recent years, an automatic guided vehicle (AGV) has been frequently used to transport loads and the like in large facilities. An example of a facility using an AGV is a container terminal, which is a port facility. Inside the container terminal, an AGV transports containers that are temporarily stored for marine transports.

Generally, an AGV used in a container terminal transmits a radio wave from a radio wave transmitter provided in its own device, and estimates its self-location by a transponder system using a response from a radio wave responder previously embedded in a prescribed position on the ground. In order to use a transponder system technology for an AGV, a radio wave responder is installed in a prescribed position in container terminal premises in advance, and the installation takes time and effort to construct a facility.

On the other hand, an AGV can estimate its self-location by a simple process using map information in the facility generated in advance and environmental information of surroundings acquired by Light Detection and Ranging (LiDAR). The AGV can travel to a prescribed destination based on the estimated self-location information.

### CITATION LIST

### PATENT LITERATURE

Patent Literature 1: Japanese Unexamined Patent Application Publication No. 2009-169845

### SUMMARY OF THE INVENTION

### TECHNICAL PROBLEM

Each container is temporary stored in the premises of a container terminal, and the container storage situation in the premises changes from hour to hour. Therefore, in order to perform a self-location estimation process using map information and environmental information in the premises of a container terminal as described above, the AGV updates the map information to be used in accordance with changes in the container storage situation in the premises.

As a technology to cope with this, there is Simultaneous Localization and Mapping (SLAM) in which a mobile body simultaneously performs self-location estimation and generation of map information. By using SLAM technology, the AGV can perform self-location estimation and generation of map information of the surroundings while traveling.

However, since the container storage situation changes frequently in the container terminal premises as described above, the AGV may not be able to correctly determine whether to update the map information or correct the self-location estimation when it detects this change using SLAM technology. Therefore, accurate self-location estimation cannot be performed, and the AGV may not be able to travel properly if it corrects the self-location estimation even though the container storage situation has changed.

It is an object of the present disclosure to provide a self-location estimation device, an autonomous driving vehicle, and a self-location estimation method capable of easily and accurately estimating a self-location in a facility where an object of a prescribed shape is stored.

### SOLUTION TO PROBLEM

A self-location estimation device in accordance with an embodiment of the present disclosure includes: a map information acquisition unit configured to acquire map information in a storage facility generated based on shape information of an object and storage status information of the object in the storage facility; an environmental information acquisition unit configured to acquire environmental information of surroundings; and a self-location estimation unit configured to estimate a self-location based on the map information acquired by the map information acquisition unit and the environmental information acquired by the environmental information acquisition unit.

The self-location estimation device may be communicatively connected to a storage facility management device that manages the shape information of the object and the storage status information of the object in the storage facility and may be installed on a mobile body movable in the storage facility; based on the shape information of the object managed by the storage facility management device and the storage status information in the storage facility; the map information acquisition unit may be configured to acquire the map information generated by the storage facility management device, the mobile body, or a map information generation device communicatively connected to the storage facility management device and the self-location estimation device; the environmental information acquisition unit may be configured to acquire the environmental information of surroundings of the mobile body; and the self-location estimation unit may be configured to estimate a location of the mobile body as the self-location.

The storage facility may have storage spaces for storing the object, and the storage status information of the object may include location information of each of the storage spaces and information on a number of the object stored in each of the storage spaces.

An autonomous driving vehicle in accordance with an embodiment of the present disclosure includes: the aforementioned self-location estimation device; a movement mechanism configured to move the autonomous driving vehicle; and a travel controller configured to control the movement mechanism so that the autonomous driving vehicle moves on a prescribed path based on the self-location estimated by the self-location estimation device.

A self-location estimation method in accordance with an embodiment of the present disclosure includes: acquiring map information in a storage facility generated based on shape information of an object and storage status information of the object in the storage facility; acquiring environmental information of surroundings; and estimating a self-location based on the acquired map information and the acquired environmental information.

### EFFECT OF THE INVENTION

According to the present disclosure, it is possible to easily and accurately estimate the self-location in a facility where an object of a prescribed shape is stored.

### BRIEF DESCRIPTION OF DRAWINGS

[FIG. 1] FIG. 1 is an overall view showing a configuration of a container management system using a self-location estimation device according to the first to third embodiments.
[FIG. 2] FIG. 2 is a block diagram showing a configuration of a container management system using a self-location estimation device according to the first embodiment.
[FIG. 3A] FIG. 3A is an example of coordinate information for each storage space in container terminal premises stored in a container management device connected to the self-location estimation device according to the first embodiment.
[FIG. 3B] FIG. 3B is an example of type and number of containers currently stored in each storage space in container terminal premises stored in a container management device connected to the self-location estimation device according to the first embodiment.
[FIG. 3C] FIG. 3C is an example of coordinate information of each crane device in container terminal premises stored in a container management device connected to the self-location estimation device according to the first embodiment.
[FIG. 4] FIG. 4 is a sequence diagram showing the operation of a container management system using the self-location estimation device according to the first embodiment.
[FIG. 5] FIG. 5 is a block diagram showing the configuration of a container management system using the self-location estimation device according to the second embodiment.
[FIG. 6] FIG. 6 is a sequence diagram showing the operation of a container management system using the self-location estimation device according to the second embodiment.
[FIG. 7] FIG. 7 is a block diagram showing the configuration of a container management system using the self-location estimation device according to the third embodiment.
[FIG. 8] FIG. 8 is a sequence diagram showing the operation of a container management system using the self-location estimation device according to the third embodiment.

### DESCRIPTION OF EMBODIMENTS

A container management system (storage facility management system) for managing the operation of an automatic guided vehicle (AGV), which is an autonomous driving vehicle (mobile body) equipped with a self-location estimation device according to the present disclosure, in container terminal (storage facility) premises is described below with reference to the drawings. A container terminal is a facility for temporarily storing containers (objects) that are carried in.

### (First Embodiment)

### (Configuration of Container Management System 1A according to the First Embodiment)

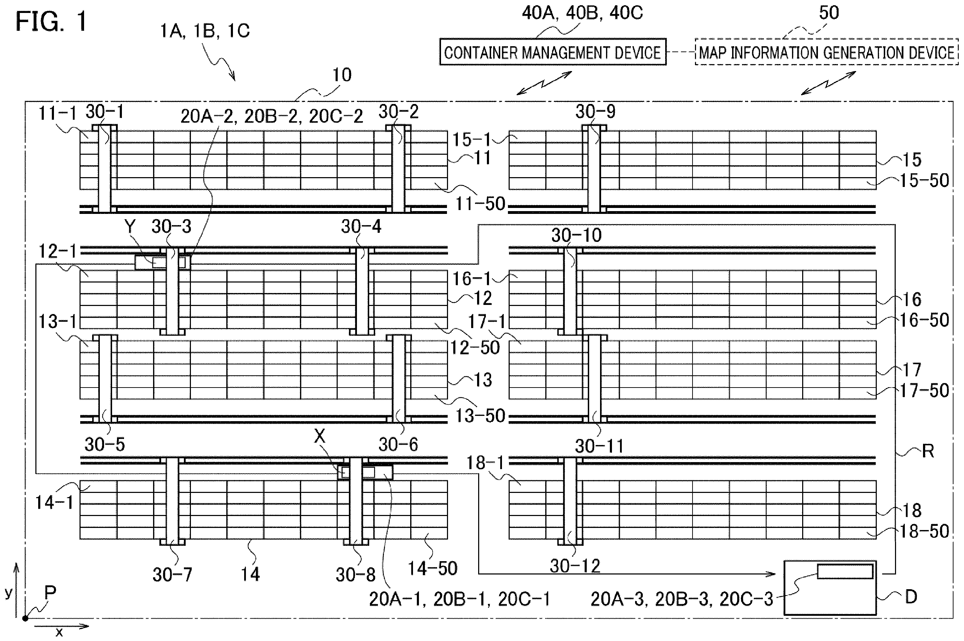

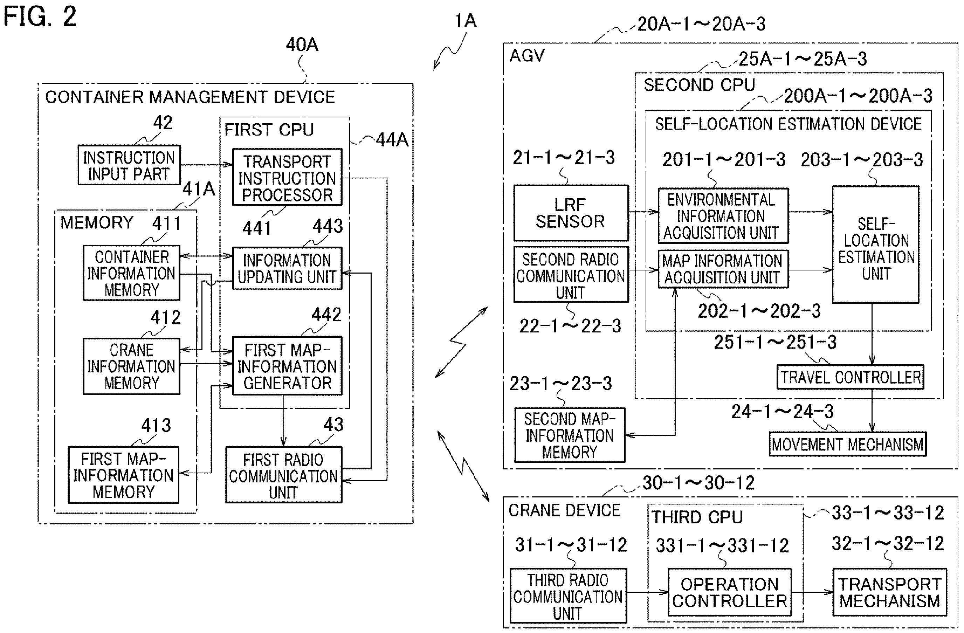

A configuration of a container management system 1A according to the first embodiment will be described with reference to FIGS. 1 and 2. In this embodiment, a container management system 1A manages a storage status of containers in premises of a container terminal 10 and an operation of AGVs and crane devices installed in the premises of the container Terminal 10.

FIG. 1 is a top view of the premises of the container terminal 10. As shown in FIG. 1, the container terminal 10 has a plurality of preset container storage areas 11 to 18. Each container storage area 11 to 18 has, for example, 50 storage spaces (11-1 to 11-50, 12-1 to 12-50... 18-1 to 18-50) set with 10 horizontal rows by 5 vertical columns.

The container management system 1A includes 3 AGVs 20A-1 to 20A-3 traveling in the premises of the container terminal 10, crane devices 30-1 to 30-12 installed in the premises of the container terminal 10, and a container management device 40A. The number of AGVs used in the container management system 1A is not limited to three, but may be smaller or larger. Hereinafter, the AGV is stated as AGV 20A if any of AGVs 20A-1 to 20A-3 is not specified.

Each of the crane devices 30-1 to 30-12 is installed in one of the container storage areas 11 to 18 to be laterally movable. Specifically, the crane devices 30-1 and 30-2 are installed in the container storage area 11. The crane devices 30-3 and 30-4 are installed in the container storage area 12. The crane devices 30-5 and 30-6 are installed in the container storage area 13. The crane devices 30-7 and 30-8 are installed in the container storage area 14. The crane device 30-9 is installed in the container storage area 15. The crane device 30-10 is installed in the container storage area 16. The crane device 30-11 is installed in the container storage area 17. The crane device 30-12 is installed in the container storage area 18.

The number of crane devices installed in the premises of the container terminal 10 is not limited to twelve, but may be smaller or larger. Hereinafter, the crane device is stated as the crane device 30 if any of the crane devices 30-1 to 30-12 in the container terminal 10 is not specified.

As shown in FIG. 2, the container management device 40A has a memory 41A, an instruction input part 42, a first radio communication unit 43, and a first CPU 44A. The memory 41A has a container information memory 411, a crane information memory 412, and a first map information memory 413. The container information memory 411 stores storage status information including shape information and storage location information of each container stored in premises of the container terminal 10. The crane information memory 412 stores shape information and location information of each of the crane devices 30-1 to 30-12 installed in the premises of the container terminal 10. The first map information memory 413 stores generated and updated map information of the premises in the container terminal 10 as described later.

The instruction input part 42 inputs a container carry-in instruction and a carry-out instruction by an operator's operation and the like. The first radio communication unit 43 performs a radio communication with the AGVs 20A-1 to 20A-3 and the crane devices 30-1 to 30-12.

The first CPU 44A has a transport instruction processor 441, a first map-information generator 442, and an information updating unit 443. The transport instruction processor 441 transmits the container carry-in or carry-out instruction input by the instruction input unit 42 to the corresponding crane device 30 and the AGV 20A via the first radio communication unit 43.

The first map-information generator 442 generates map information on premises of the container terminal 10 based on the information stored in the container information memory 411 and the information stored in the crane information memory 412, and stores it in the first map-information memory 413. The first map-information generator 442 updates the map information stored in the first map-information memory 413 based on the updated information when the information stored in the container information memory 411 is updated. The first map-information generator 442 transmits the generated or updated map information to the AGVs 20A-1 to 20 A-3 through the first radio communication unit 43.

The information updating unit 443 updates container information and crane information stored in the memory 41A when operations executed by the AGV 20A and the crane device 30 are completed based on the carry-in instruction or carry-out instruction acquired from the transport instruction processor 441.

The AGV 20A-1 includes a laser range finder (LRF) sensor 21-1, a second radio communication unit 22-1, a second map-information memory 23-1, a movement mechanism 24-1, and a second CPU 25A-1. The LRF sensor 21-1 measures a distance to surrounding objects. The second radio communication unit 22-1 performs radio communication with the container management device 40A. The second map information memory 23-1 stores map information on the premises in the container terminal 10 acquired from the container management device 40 A. The movement mechanism 24-1 is a mechanism for a movement of the AGV 20A-1.

The second CPU 25 A-1 has a self-location estimation device 200A-1 and a travel controller 251-1. The self-location estimation device 200A-1 has an environmental information acquisition unit 201-1, a map information acquisition unit 202-1, and a self-location estimation unit 203-1.

The environmental information acquisition unit 201-1 acquires information measured by the LRF sensor 21-1 as environmental information of surroundings. When the map information acquisition unit 202-1 acquires map information on the premises in the container terminal 10 from the container management device 40A through the second radio communication unit 22-1, the relevant map information is stored in the second map information memory 23-1. When the carry-in or carry-out instruction of a container is acquired from the container management device 40A, the map information acquisition unit 202-1 reads out the map information on the premises in the container terminal 10 stored in the second map information memory 23-1.

The self-location estimation unit 203-1 estimates the self-location based on the environmental information of surroundings acquired by the environmental information acquisition unit 201-1 and the map information on the premises in the container terminal 10 read out by the map information acquisition unit 202-1. The travel control unit 251-1 controls the movement mechanism unit 24-1 so that the AGV 20A-1 moves on a prescribed path R base on the self-location estimated by the self-location estimation unit 203-1.

Since the configuration of the AGVs 20A-2 and 20A-3 are the same as that of the AGV20A-1, a detailed description thereof will be omitted.

The crane device 30-1 has a third radio communication unit 31-1, a transport mechanism 32-1, and a third CPU 33-1. The third radio communication unit 31-1 performs radio communication with the container management device 40A. The transport mechanism 32-1 is a mechanism for transporting containers between the AGV 20A and a corresponding storage space. The third CPU 33-1 has an operation controller 331-1 for controlling the transport mechanism 32-1 based on a container carry-in or carry-out instruction acquired through the third radio communication unit 31-1.

Since the configuration of the crane devices 30-2 to 30-12 is the same as that of the crane device 30-1, a detailed description thereof is omitted.

### (Operation of Container Management System 1A according to the First Embodiment)

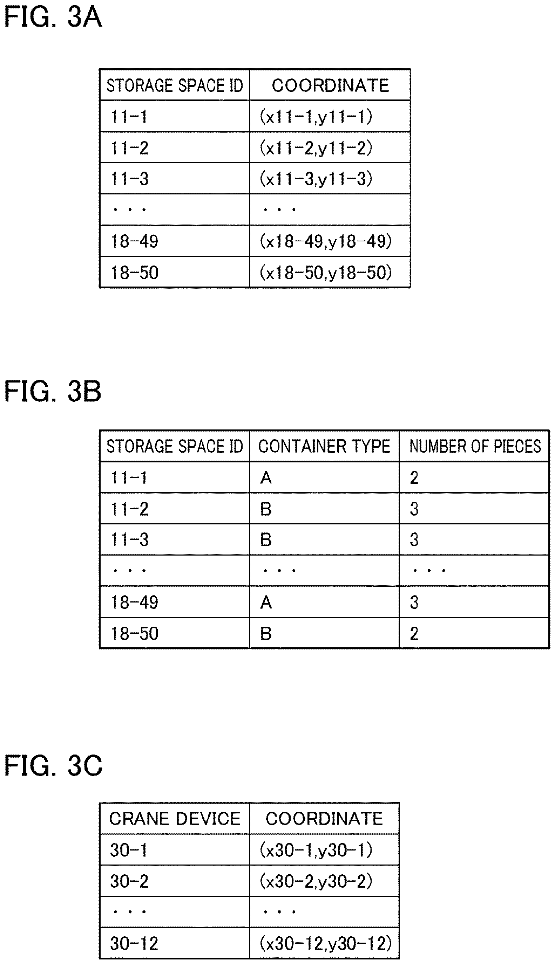

An operation of the container management system 1A according to the first embodiment will be described below. FIGS. 3A and 3B show an example of information stored in the container information memory 411 of the container management device 40A in the first embodiment.

FIG. 3A shows coordinate information for each storage space in the premises of the container terminal 10. The coordinate information is a positional coordinate of one point in the container terminal 10, for example, a prescribed point in each storage space when the origin is a point P which is a corner of a rectangular container terminal 10 as shown in FIG. 1, the horizontal direction is an x-axis, and the vertical direction indicating a depth is a y-axis.

FIG. 3B shows the type and number of pieces of containers currently stored for each storage space in the premises of the container terminal 10. In this embodiment, there are two types of containers stored in the premises of the container terminal 10: for example, a 20 ft container having a length of 6,058 mm× a width of 2,438 mm× a height of 2,591 mm, and a 40 ft container having a length of 12,192 mm× a width of 2,438 mm× a height of 2,591.

As shape information for each container type, the container information memory 411 stores shape information based on 3D point cloud data previously generated by LiDAR measurement or LiDAR simulation for the 20 ft container and the 40 ft container.

An example of information stored in the crane information memory 412 of the container management device 40A is shown in FIG. 3C. FIG. 3C shows coordinate information of each crane device 30-1 to 30-12 in the premises of the container terminal 10. This coordinate information is the position coordinates for a prescribed single point in each crane device 30-1 to 30-12 when the point P in the premises of the container terminal 10 is the origin, the horizontal direction is the x-axis, and the vertical direction indicating the depth is the y-axis.

The crane information memory 412 of the container management device 40A stores shape information based on 3D point cloud data previously acquired by LiDAR simulation and the like for each crane device 30-1 to 30-12.

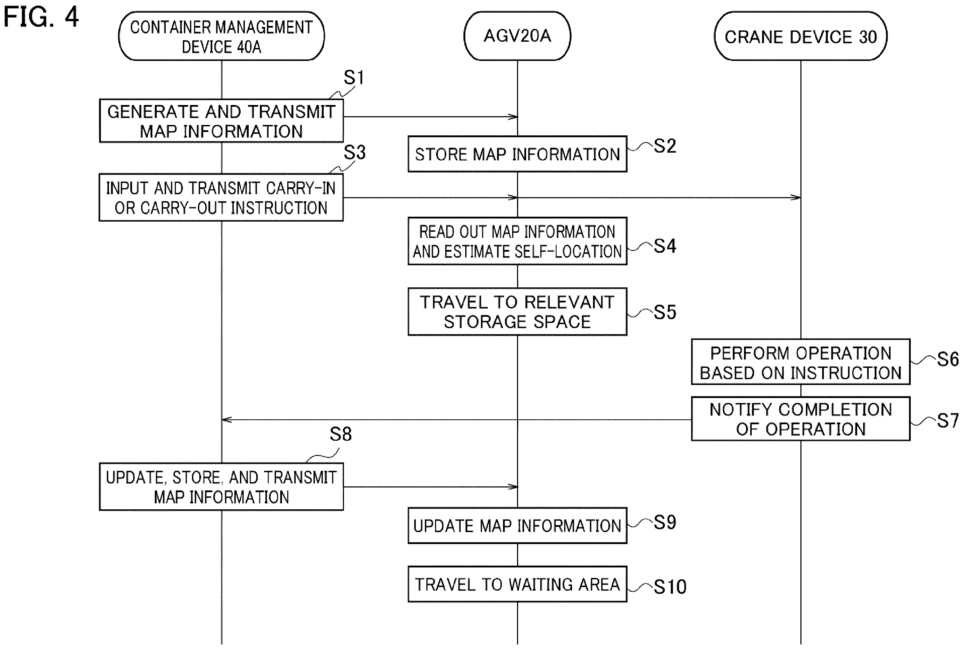

Processes performed by each device when the container management system 1A starts operating with these information stored in the container information memory 411 and the crane information memory 412 are explained with reference to a sequence diagram in FIG. 4. The AGVs 20A-1, 20A-2, and 20A-3 are stopped in a prescribed standby area D in the premises of the container terminal 10 when the operation of the container management system 1A starts.

First, the first map-information generator 442 of the container management device 40A generates map information in the premises of the container terminal 10 composed of 3D point cloud data, based on the information stored in the container information memory 411 and the information stored in the crane information memory 412. At that time, since information on the type and number of pieces of containers stored for each storage space are stored the container information memory 411, the first map-information generator 442 can recognize the shape information of the entire container for each storage space using the information. The first map-information generator 442 can generate the corresponding map information by rotating the recognized shape information of the entire container for each storage space and the stored shape information of the crane device 30 at a prescribed azimuth angle and translating them to the corresponding positions.

The first map-information generator 442 adds identification information of the relevant container to the 3D point cloud data corresponding to each container when generating the relevant map information. The first map-information generator 442 stores the generated map information on the premises of the container terminal 10 in the first map information memory 413. Further, the first map-information generator 442 transmits the generated map information on the premises of the container terminal 10 to the AGVs 20A-1 to 20A-3 through the first radio communication unit 43 (S1).

The AGVs 20A-1 to 20A-3 respectively acquire the map information on the premises of the container terminal 10 transmitted from the container management device 40A by the map information acquisition units 202-1 to 202-3 through the second radio communication units 22-1 to 22-3. The map information acquisition units 202-1 to 202-3 store the acquired map information on the premises of the container terminal 10 in the second map-information memories 23-1 to 23-3 (S2), respectively.

After that, the transport instruction processor 441 determines the crane device 30 and the AGV 20A to execute a process based on the relevant instruction when the carry-in or carry-out instruction of a prescribed container is input by the instruction input unit 42 of the container management device 40A. Then, the transport instruction processor 441 transmits information on the relevant instruction to the corresponding crane device 30 and the AGV 20A through the first radio communication unit 43 (S3).

As an example, an instruction to carry the container X out of the storage space 14-8 of the container storage area 14 and an instruction to carry the container Y into the storage space 12-3 of the container storage area 12 are inputted by the instruction input unit 42. When these instructions are inputted, the transport instruction processor 441 first determines that a carry-in process of the container X is executed by the crane device 30-8 and the AGV 20A-1. Then, the transport instruction processor 441 transmits information on the carry-out instruction of the container X to the crane device 30-8 and the AGV 20A-1 through the first radio communication section 43.

Further, the transport instruction processor 441 determines that a carry-in process of the container Y is executed by the crane device 30-3 and the AGV 20A-2. The transport instruction processor 441 transmits information on the transport instruction of the container Y to the crane device 30-3 and the AGV20A-2 via the first radio communication section 43.

In the AGV 20A-1, when the information on the transport instruction transmitted from the container management device 40A is acquired through the second radio communication unit 22-1, the environmental information acquisition unit 201-1 of the self-location estimation device 200A-1 acquires information on a distance to a surrounding object measured by the LRF sensor 21-1. Based on the acquired information, the environmental information acquisition unit 201-1 generates surrounding shape information showing the shape of the surrounding object by 3D point cloud data.

Furthermore, in the AGV 20A-1, when the information of the carry-out instruction transmitted from the container management apparatus 40A is acquired through the second radio communication section 22-1, the map information acquisition unit 202-1 reads out the map information on the premises of the container terminal 10 stored in the second map information memory 23-1. Then, the self-location estimation unit 203-1 estimates the self-location by performing a matching process between the 3D point cloud data indicating the surrounding shape information generated by the environmental information acquisition unit 201-1 and the 3D point cloud data indicating the map information read out by the map information acquisition unit 202-1 (S4). For this matching process of the 3D point cloud data, a known technique such as normal distributions transform (NDT) scan matching can be used.

Then, the travel controller 251-1 controls the movement mechanism 24-1 so that the AGV 20A-1 moves on the path R based on the self-location estimated by the self-location estimation unit 203-1. The movement mechanism 24-1, controlled by the travel control unit 251-1, moves the AGV 20A-1 on the path R within the premises of the container terminal 10 to a position close to the storage space 14-8 (S5).

When the AGV 20A-1 arrives at the position close to the storage space 14-8 and stops, the crane device 30-8 performs an operation to carry out the container X based on the instruction information acquired from the container management device 40A (S6). The operation to carry out the container X by the crane device 30-8 is an operation to lift the container X stored in the storage space 14-8 and load it on the AGV 20A-1.

When the operation of the crane device 30-8 is completed and the container X is loaded on the AGV 20A-1, the crane device 30-8 transmits an operation completion notice concerning the carrying out of the container X to the container management device 40A through the third radio communication unit 31-8 (S7). The operation completion notice includes location information of the crane device 30-8 after the relevant operation is completed. In the container management device 40A, when an operation completion notice concerning carrying-out of the container X is acquired from the crane device 30-8 through the first radio communication part 43, the information updating unit 443 updates the container information stored in the container information memory 411 and the crane information stored in the crane information memory 412 based on the relevant notice. Specifically, the number of pieces of containers stored in the storage space 14-8 in the container information is reduced by one, and the location information of the crane device 30-8 is updated to the information contained in the operation completion notice.

When the container information in the container information memory 411 and the crane information in the crane information memory 412 are updated, the first map-information generator 442 updates the map information stored in the first map-information memory 413 based on the updated information. When the first map-information generator 442 updates the map information, it deletes the 3D point cloud data corresponding to the container X in the storage space 14-8 in the map information. The first map-information generator 442 stores the updated map information in the first map-information memory 413 and transmits it to the AGV 20A-1 through the first radio communication section 43 (S8).

In the AGV 20A-1, when the updated map information transmitted from the container management device 40A is acquired through the second radio communication section 22-1, the map information acquisition unit 202-1 updates the information stored in the second map-information memory 23-1 with the relevant map information (S9). Further, in the AGV 20A-1, the self-location estimation unit 203-1 estimates the self-location using the updated map information, and based on the estimated self-location, the travel controller 251-1 controls the movement mechanism 24-1 so that the AGV 20A-1 travels to the standby area D (S10). The AGV 20A-1 waits in the standby area D until it receives the next carry-in or carry-out instruction.

Furthermore, the AGV 20A-2, which has acquired the carry-in instruction in step S3, loads the container Y to be carried in at the standby area D, and the self-location estimation device 200 A-2 estimates the self-location in the same manner as the AGV 20A-1 (S4). Then, the AGV 20A-2 travels on the path R to a position close to the storage space 12-3 based on the estimated self-location (S5).

Then, the AGV 20A-2 arrives at a position close to the storage space 12-3 and stops, and the crane device 30-3 lifts the container Y loaded on the AGV 20A-2 and stores it in the storage space 12-3 to perform a carry-in operation of the container Y (S6). When the carry-in operation of the container Y is completed and the crane device 30-3 transmits an operation completion notice concerning the carry-in operation of the container Y to the container management device 40A through the third radio communication unit 31-3 (S7), the information updating unit 443 updates the container information stored in the container information memory 411 and the crane information stored in the crane information memory 412 based on the relevant notice. Specifically, the number of containers stored in the storage space 12-3 in the container information is increased by 1, and the position information of the crane device 30-3 is updated to the information contained in the operation completion notice.

When the container information in the container information memory 411 and the crane information in the crane information memory 412 are updated, the first map-information generator 442 updates the map information stored in the first map-information memory 413 based on the updated information. The first map-information generator 442 stores the updated map information in the first map-information memory 413 and transmits it to the AGV 20A-2 through the first radio communication unit 43 (S8).

In the AGV 20A-2, when the updated map information transmitted from the container management device 40A is acquired through the second radio communication unit 22-2, the map information acquisition unit 202-2 updates the information stored in the second map-information memory 23-2 with the relevant map information (S9). Then, in the AGV 20A-2, the self-location estimation unit 203-2 estimates the self-location using the updated map information, and the travel controller 251-2 controls the movement mechanism 24-2 based on the estimated self-location so that the AGV20A-2 travels to the standby area D (S10). The AGV 20A-2 waits at the standby area D until it receives the next carry-in or carry-out instruction.

According to the first embodiment, the AGV 20A can easily and accurately estimate a self-location using the map information on the premises generated based on the shape information and the location information of the container and the crane device 30 on the premises of the container terminal 10. Further, the AGV 20A can travel on a prescribed path in the premises of the container terminal 10 as appropriate using the estimated information of the self-location. At that time, the container management device 40A generates map information on the premises of the container terminal 10 and supplies it to a plurality of AGVs 20A, so that each AGV 20A can efficiently execute the self-location estimation process with a small processing load. Furthermore, in the container terminal 10, the shapes of containers stored in the premises are limited to a few patterns, and the location of the storage space where containers are stored is set in advance. Therefore, the container management device 40A can easily generate map information on premises of the container terminal 10 by using location information for each storage space and stored information on the shape and number of pieces of containers.

### (Second Embodiment)

### (Configuration of Container Management System 1B according to the Second Embodiment)

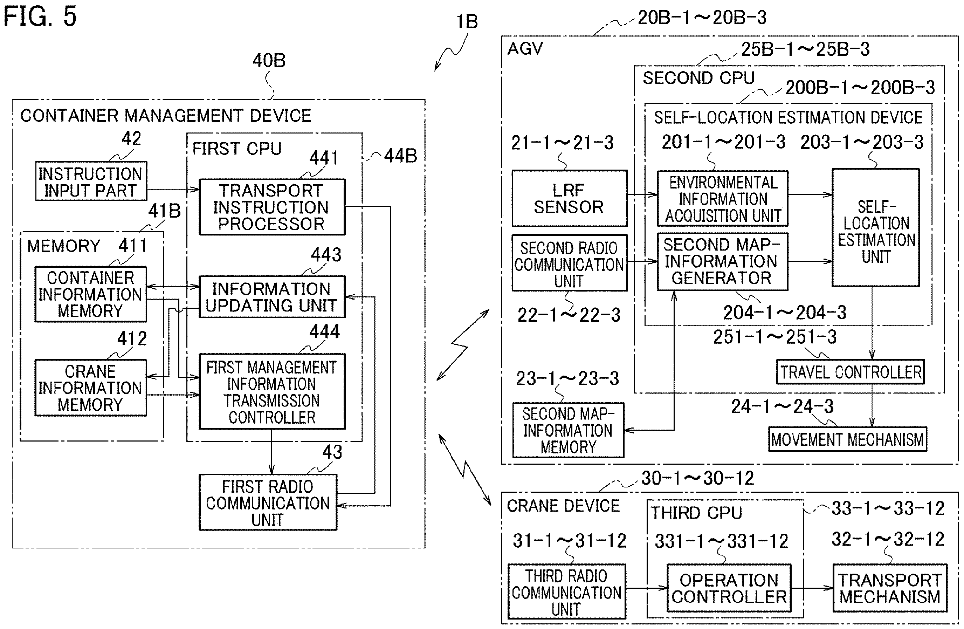

A configuration of a container management system 1B according to the second embodiment will be described with reference to FIGS. 1 and 5. In the container management system 1B according to the embodiment, a first CPU 44B of a container management device 40B has a first management information transmission controller 444 in place of the first map information generator 442 described in the first embodiment. Further, a memory 41B of the container management device 40B does not have the first map information memory 413 described in the first embodiment. Furthermore, the self-location estimation devices 200B-1 to 200B-3 of AGVs 20B-1 to 20B-3 have second map-information generators 204-1 to 204-3 as a map information acquisition unit. Since the configuration of the container management system 1B other than these is similar to the configuration of the container management system 1A described in the first embodiment, the detailed description of the parts having the same functions will be omitted.

In this embodiment, the first management information transmission controller 444 of the container management device 40B transmits information stored in the container information memory 411 and information stored in the crane information memory 412 to the AGVs 20B-1 to 20B-3 through the first radio communication unit 43. The second map-information generators 204-1 to 204-3 of the AGVs 20B-1 to 20B-3 generates map information on the premises of the container terminal 10 based on the information acquired from the container management device 40B through the second radio communication units 22-1 to 22-3 and stores it in the second map information memory 23-1 to 23-3.

### (Operation of Container Management System according to the Second Embodiment)

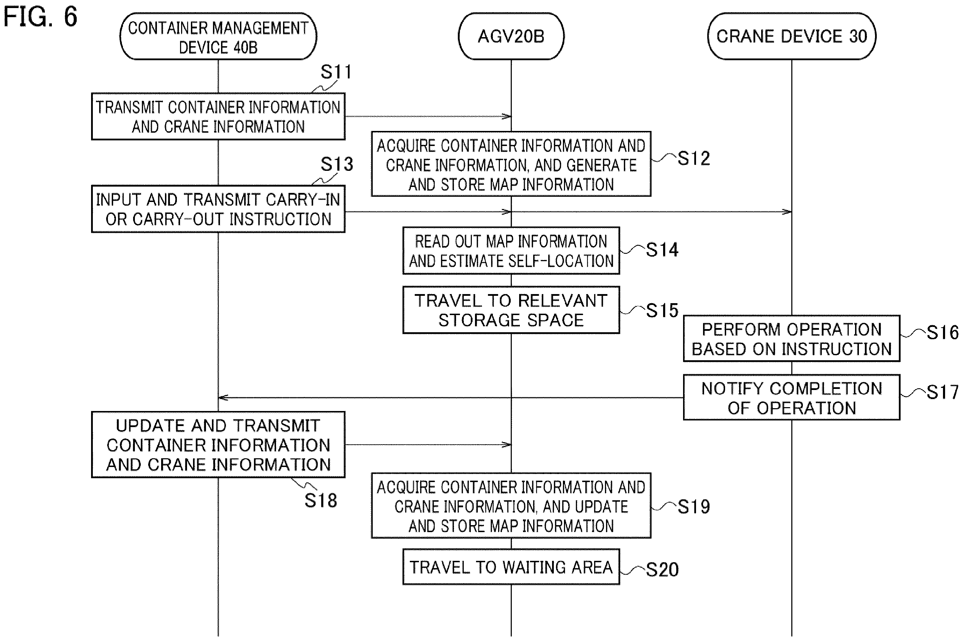

The operation of the container management system 1B according to the present embodiment will be described with reference to a sequence diagram shown in FIG. 6. First, the first management information transmission controller 444 of the container management device 40B transmits the container information stored in the container information memory 411 and the crane information stored in the crane information memory 412 to the AGVs 20B-1 to 20B-3 through the first radio communication unit 43 (S 11).

In the AGVs 20B-1 to 20B-3, when the container information and the crane information transmitted from the container management device 40B are acquired through the second radio communication units 22-1 to 22-3, the second map-information generators 204-1 to 204-3 generate map information on the premises of the container terminal 10 composed of 3D point group data based on the acquired information. The second map-information generators 204-1 to 204-3 store the generated map information in the second map-information memories 23-1 to 23-3 (S12), respectively.

Thereafter, processes of steps S13 to S17 executed when carry-in or carry-out instruction for a prescribed container is inputted at the instruction input unit 42 of the container management device 40B is similar to the processes of steps S3 to S7 described in the first embodiment, and therefore, the detailed description thereof is omitted.

An operation completion notice concerning the relevant process is transmitted from the crane device 30 to the container management device 40B through the third radio communication units 31-1 to 31-12 (S17) when the carry-in process or carry-out process of the container is completed. In the container management device 40B, when the operation completion notice is acquired through the first radio communication unit 43, the information updating unit 443 updates the container information and the crane information stored in the memory 41B based on the relevant notice. Then, the first management information transmission controller 444 transmits the updated container information and crane information to the AGVs 20B-1 to 20B-3 through the first radio communication unit 43 (S18).

The second map-information generators 204-1 to 204-3 of the AGVs 20B-1 to 20B-3 acquire the updated container information and crane information transmitted from the container management unit 40B through the second radio communication units 22-1 to 22-3. The second map-information generators 204-1 to 204-3 update and store the map information stored in the second map information memories 23-1 to 23-3 (S19) based on the acquired information.

Then, the self-location estimation units 203-1 to 203-3 of the AGVs 20B-1 to 20B-3 that have performed the carry-in process or carry-out process estimates the self-location using the updated map information, and the travel controllers 251-1 to 251-3 control the travel mechanisms 24-1 to 24-3 based on the estimated self-location so that the AGVs 20B-1 to 20B-3 to the standby area D (S20). The AGVs 20B-1 to 20B-3 wait at the standby area D until they receive the next carry-in or carry-out instruction.

According to the second embodiment described above, the AGVs 20B-1 to 20B-3 traveling in the premises of the container terminal 10 can easily and accurately estimate a self-location using the map information of the premises generated based on the shape information and position information of the container and the crane device 30 in the premises. In this case, each AGV 20B-1 to 20B-3 generates the map information on the premises of the container terminal 10, so that each AGV 20B-1 to 20B-3 can generate the map information of the required position according to traveling routes.

### (Third Embodiment)

### (Configuration of Container Management System 1C according to the Third Embodiment)

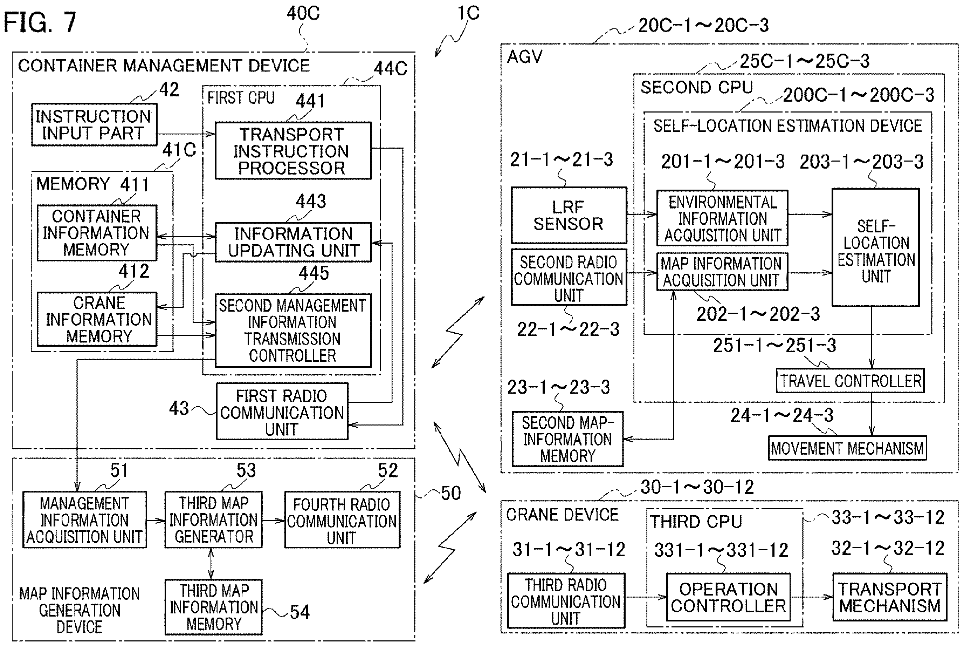

A configuration of a container management device 1C according to the third embodiment will be described with reference to FIGS. 1 and 7. The container management system 1C according to the first embodiment further includes a map-information generation device 50 in the configuration of container management device 1A described in the first embodiment. Furthermore, the first CPU 44C of the container management device 40C includes a second management information transmission controller 445 in place of the first map-information generator 442 described in the first embodiment. Moreover, the memory 41C of the container management device 40C does not include the first map information memory 413 described in the first embodiment. Since other configuration of the container management device 1C is the same as that of the container management device 1A described in the first embodiment, a detailed description of the parts having the same functions will be omitted.

In this embodiment, the second management information transmission controller 445 of the container management device 40C transmits the information stored in the container information memory 411 and the information stored in the crane information memory 412 to the map-information generation device 50.

The map-information generation device 50 includes a management information acquisition unit 51, a fourth radio communication unit 52, a third map-information generator 53, and a third map-information memory 54. The management information acquisition unit 51 acquires information transmitted from the container management device 40C. The fourth radio communication unit 52 performs a radio communication with the AGVs 20C-1 to 20C-3. The third map-information generator 53 generates and updates map information on the premises of the container terminal 10 based on the information acquired from the container management device 40C, and transmits it to the AGVs 20C-1 to 20C-3 through the fourth radio communication unit 52. The third map information memory 54 stores map information on the premises of the container terminal 10 generated and updated by the third map-information generator 53.

When the map information acquisition units 202-1 to 202-3 of the AGVs 20C-1 to 20C-3 acquire the map information on the premises of the container terminal 10 from the map information generation device 50 through the second radio communication unit 22-1, the relevant map information is stored in the second map information memory 23-1.

### (Operation of Container Management System According to the Third Embodiment)

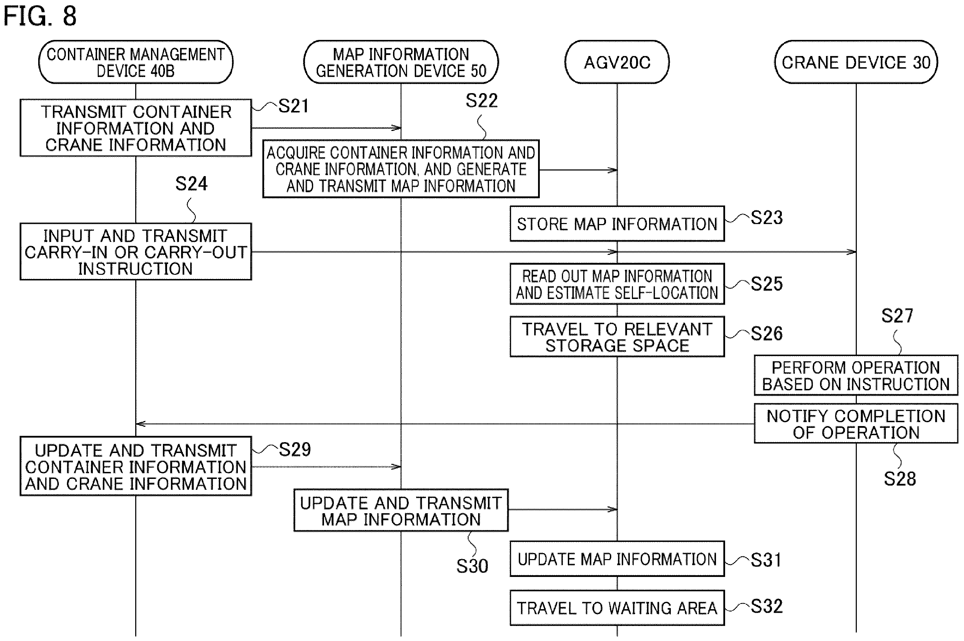

An operation of a container management system 1C according to the present embodiment will be described with reference to a sequence diagram shown in FIG. 8. First, the second management information transmission controller 445 of the container management device 40C transmits the container information stored in the container information memory 411 and the crane information stored in the crane information memory 412 to the map-information generation device 50 (S21).

In the map-information generation device 50, the management information acquisition unit 51 acquires the container information and crane information transmitted from the container management device 40C, and the third map-information generator 53 generates the map information on the premises of the container terminal 10 based on the acquired information. The third map-information generator 53 stores the generated map information of the premises of the container terminal 10 in the third map information memory 54 and transmits it to the AGVs 20C-1 to 20C-3 through the fourth radio communication unit 52 (S22).

In the AGVs 20C-1 to 20C-3, the map information acquisition units 202-1 to 202-3 acquire the map information of the premises of the container terminal 10 transmitted from the map-information generation device 50 through the second radio communication units 22-1 to 22-3. Each of the map information acquisition units 202-1 to 202-3 store the acquired map information of the container terminal 10 in the second map information memories 23-1 to 23-3 (S23).

Thereafter, processes of steps S24 to S28 executed when a prescribed container carry-in or carry-out instruction is inputted at the instruction input unit 42 of the container management device 40C is the same as the processes of steps S3 to S7 described in the first embodiment, and therefore, the detailed description thereof is omitted.

When the container carry-in or carry-out process is completed, an operation completion notice concerning the relevant process is transmitted from the crane device 30 to the container management device 40C through the third radio communication units 31-1 to 31-12 (S28). In the container management device 40C, when the operation completion notice is acquired via the first radio communication unit 43, the information updating unit 443 updates the container information and the crane information stored in the memory 41C based on the relevant notice. Then, the second management information transmission controller 445 transmits the updated container information and crane information to the map-information generation device 50 (S29).

In the map-information generation device 50, the third map information generator 53 acquires the updated container information and crane information transmitted from the container management device 40C. The third map information generator 53 updates the map information stored in the third map-information memory 54 based on the acquired information. The third map-information generator 53 stores the updated map information in the third map-information memory 54 and transmits it to the AGVs 20C-1 to 20C-3 through the fourth radio communication unit 52 (S30).

In the AGVs 20C-1 to 20C-3, when the updated map information transmitted from the map-information generation device 50 is acquired through the second radio communication units 22-1 to 22-3, the map information acquisition units 202-1 to 202-3 update the information stored in the second map information memories 23-1 to 23-3 with the relevant map information (S31). Then, in the AGVs 20C-1 to 20C-3 that have performed a carry-out or carry-in process, the self-location estimation units 203-1 to 203-3 estimate the self-location using the updated map information, and the travel controllers 251-1 to 251-3 control the travel mechanisms 24-1 to 24-3 based on the estimated self-location to drive the AGVs 20C-1 to 20C-3 to the standby area D (S32). AGVs 20C-1 to 20C-3 wait in the standby area D until it receives the next carry-in or carry-out instruction.

According to the third embodiment described above, the AGVs 20C-1 to 20C-3 travelling in the premises of the container terminal 10 can easily and accurately estimate a self-location using the map information of the premises generated based on the shape information and position information of the container and the crane device 30 in the premises. At this time, the map information generation device 50 connected to the container management device 40C generates the map information on the premises of the container terminal 10 and supplies it to the plurality of AGVs 20C-1 to 20C-3. With this configuration, the processing load of the container management device 40C and each AGVs 20C-1 to 20C-3 can be reduced, and the self-location estimation process can be efficiently executed.

In the first to third embodiments described above, the case in which 3D information is used as the shape information of the container, the shape information of the crane device 30, and the map information has been described, but 2D information viewed from the upward direction may be used as the information. In the case on which 2D information is used, updating of the map information is unnecessary when the carry-in or carry-out processes of containers on a second or higher shelves are performed for a prescribed storage space.

Further, in the first to third embodiments described above, when there is an area in the premises of the container terminal 10 where for the Global Navigation Satellite System (GNSS), GNSS signals from multiple satellites can be received, the AGV 20 may be switched to acquire self-location information by receiving GNSS signals and calculating location information in the relevant area. GNSS is, for example, a Global Positioning System (GPS).

Although some embodiments have been described, it is possible to modify or vary the embodiments based on the above disclosure. All components of the above embodiments and all features described in the scope of claims may be individually extracted and combined as long as they do not contradict each other.

The entire contents of Japanese Patent Application No. 2021-180096 (filing date: November 4, 2021) are incorporated herein.

### REFERENCE NUMERALS LIST

10 container terminal (storage facility)
11-1 to 11-50, 12-1 to 12-50, 13-1 to 13-50, 14-1 to 14-50, 15-1 to 15-50, 16-1 to 16-50,
17-1 to 17-50, 18-1 to 18-50 storage space
20, 20A-1 to 20 A-3, 20B-1 to 20B-3, 20C-1 to 20C-3 AGV (mobile body)
24-1 to 24-3 movement mechanism
40A, 40B, 40C container management device (storage facility management device)
50 map information generation device
200A-1 to 200A-3, 200B-1 to 200B-3, 200C-1 to 200 C-3 (200) self-location estimation device
201-1 to 201-3 (201) environmental information acquisition unit
202-1 to 202-3 (202) map information acquisition unit
203-1 to 203-3 (203) self-location estimation unit
204-1 to 204-3 (204) second map information generator
251-1 to 251-3 travel controller
X, Y container (object)

## Claims

1. A self-location estimation device comprising:
a map information acquisition unit configured to acquire map information in a storage facility generated based on shape information of an object and storage status information of the object in the storage facility;
an environmental information acquisition unit configured to acquire environmental information of surroundings; and
a self-location estimation unit configured to estimate a self-location based on the map information acquired by the map information acquisition unit and the environmental information acquired by the environmental information acquisition unit.

2. The self-location estimation device according to claim 1, wherein
the self-location estimation device is communicatively connected to a storage facility management device that manages the shape information of the object and the storage status information of the object in the storage facility, and is installed on a mobile body movable in the storage facility,
based on the shape information of the object managed by the storage facility management device and the storage status information in the storage facility, the map information acquisition unit is configured to acquire the map information generated by the storage facility management device, the mobile body, or a map information generation device communicatively connected to the storage facility management device and the self-location estimation device,
the environmental information acquisition unit is configured to acquire the environmental information of surroundings of the mobile body, and
the self-location estimation unit is configured to estimate a location of the mobile body as the self-location.

3. The self-location estimation device according to claim 1, wherein
the storage facility has storage spaces for storing the object, and
the storage status information of the object includes location information of each of the storage spaces and information on a number of the object stored in each of the storage spaces.

4. The self-location estimation device according to claim 2, wherein
the storage facility has storage spaces for storing the object, and
the storage status information of the object includes location information of each of the storage spaces and information on a number of the object stored in each of the storage spaces.

5. An autonomous driving vehicle, comprising:
a self-location estimation device according to any one of claims 1 to 4;
a movement mechanism configured to move the autonomous driving vehicle; and
a travel controller configured to control the movement mechanism so that the autonomous driving vehicle moves on a prescribed path based on the self-location estimated by the self-location estimation device.

6. A self-location estimation method comprising:
acquiring map information in a storage facility generated based on shape information of an object and storage status information of the object in the storage facility;
acquiring environmental information of surroundings; and
estimating a self-location based on the acquired map information and the acquired environmental information.
